(19) Europäisches Patentamt / European Patent Office / Office européen des brevets

(11) **EP 4 276 822 B1**

(12) **EUROPEAN PATENT SPECIFICATION**

(45) Date of publication and mention
of the grant of the patent:
**06.11.2024 Bulletin 2024/45**

(21) Application number: **22198778.7**

(22) Date of filing: **29.09.2022**

(51) International Patent Classification (IPC):
**G10L 21/007** *(2013.01)* **G10L 13/033** *(2013.01)*
**G10L 25/30** *(2013.01)*

(52) Cooperative Patent Classification (CPC):
**G10L 21/007; G10L 13/033;** G10L 25/30;
G10L 2021/0135

(54) **METHOD AND APPARATUS FOR PROCESSING AUDIO, ELECTRONIC DEVICE AND STORAGE MEDIUM**

VERFAHREN UND VORRICHTUNG ZUR VERARBEITUNG VON AUDIO, ELEKTRONISCHE VORRICHTUNG UND SPEICHERMEDIUM

PROCÉDÉ ET APPAREIL DE TRAITEMENT AUDIO, DISPOSITIF ÉLECTRONIQUE ET SUPPORT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2022 CN 202210510772**

(43) Date of publication of application:
**15.11.2023 Bulletin 2023/46**

(73) Proprietor: **Beijing Baidu Netcom Science Technology Co., Ltd. Beijing 100085 (CN)**

(72) Inventor: **ZHAO, Qingen Beijing, 100085 (CN)**

(74) Representative: **HGF HGF Limited 1 City Walk Leeds LS11 9DX (GB)**

(56) References cited:
- **SONGXIANG LIU ET AL: "Transferring Source Style in Non-Parallel Voice Conversion", ARXIV.ORG, CORNELL UNIVERSITY LIBRARY, 201 OLIN LIBRARY CORNELL UNIVERSITY ITHACA, NY 14853, 19 May 2020 (2020-05-19), XP081672402**
- **FREDERIK BOUS ET AL: "Sequence-To-Sequence Voice Conversion using F0 and Time Conditioning and Adversarial Learning", ARXIV.ORG, CORNELL UNIVERSITY LIBRARY, 201 OLIN LIBRARY CORNELL UNIVERSITY ITHACA, NY 14853, 7 October 2021 (2021-10-07), XP091072988**
- **CHIEN CHUNG-MING ET AL: "Investigating on Incorporating Pretrained and Learnable Speaker Representations for Multi-Speaker Multi-Style Text-to-Speech", ICASSP 2021 - 2021 IEEE INTERNATIONAL CONFERENCE ON ACOUSTICS, SPEECH AND SIGNAL PROCESSING (ICASSP), IEEE, 6 June 2021 (2021-06-06), pages 8588 - 8592, XP033955591, DOI: 10.1109/ICASSP39728.2021.9413880**

## Description

## Technical Field

The present invention relates to the technical field of computers, further relates to the technical field of voice, and particularly relates to a method and an apparatus for processing audio, an electronic device and a storage medium.

## Background

A audio style transfer refers to combine features of a speaker, including timbre, moods and intonation to synthesized voice. Such synthesis has been used in a wide range of occasions, for example, in voice changing systems, voice chats and online games, so as to hide a real identity of a speaker and imitate others for entertainment.

An exemplary approach for voice conversion is disclosed in Songxiang, Liu et al.: "Transferring Source Style in Non-Parallel Voice Conversion", ARXIV.ORG, CORNELL UNIVERSITY LIBRARY, 201 OLIN LIBRARY CORNELL UNIVERSITY ITHACA, NY 14853, 19 May 2020.

Although the audio style transfer is implemented under supervision in the related solution, a transfer result is unsatisfactory since an audio style, such as tones and volume, cannot be accurately imitated.

## Summary

At least some embodiments of the present invention provide a method and an apparatus for processing audio, an electronic device and a storage medium, so as to at least to partially solve a technical problem of a poor audio style transfer effect in the related art.

In an embodiment of the present invention, a method for processing audio is provided. The method includes: obtaining a first target feature vector from original audio, where the first target feature vector is used for representing a phoneme feature of the original audio; obtaining a second target feature vector and a third target feature vector from audio to be transferred, where the second target feature vector is used for representing a style prosody feature of the audio to be transferred, and the third target feature vector is used for representing a speaker feature of the audio to be transferred; performing spectrogram decoding on the first target feature vector, the second target feature vector and the third target feature vector to obtain a target spectrogram feature; and converting the target spectrogram feature into target audio.

In another embodiment of the present invention, a method for training a model is provided. The method includes: obtaining a first data set, a second data set and a third data set, where the first data set includes multiple phoneme feature vectors of original sample audio, the second data set includes multiple style prosody feature vectors of sample audio to be transferred, and the third data set includes multiple speaker feature vectors of the sample audio to be transferred; obtaining a fourth data set according to the first data set, the second data set and the third data set, where the fourth data set includes a merged vector obtained from a first phoneme feature vector, a second style prosody feature vector and a third speaker feature vector, the phoneme feature vectors include the first phoneme feature vector, the style prosody feature vectors include the second style prosody feature vector, and the speaker feature vectors include the third speaker feature vector; and training an initial spectrogram decoding network model on the basis of the fourth data set to obtain a target spectrogram decoding network model.

In another embodiment of the present invention, an apparatus for processing audio is provided. The apparatus includes: a first obtaining module, configured to obtain a first target feature vector from original audio, where the first target feature vector is used for representing a phoneme feature of the original audio; a second obtaining module, configured to obtain a second target feature vector and a third target feature vector from audio to be transferred, where the second target feature vector is used for representing a style prosody feature of the audio to be transferred, and the third target feature vector is used for representing a speaker feature of the audio to be transferred; a processing module, configured to perform spectrogram decoding on the first target feature vector, the second target feature vector and the third target feature vector to obtain a target spectrogram feature; and a conversion module, configured to convert the target spectrogram feature into target audio.

In another embodiment of the present invention, an apparatus for training a model is provided. The apparatus includes: a data set obtaining module, configured to obtain a first data set, a second data set and a third data set, where the first data set includes multiple phoneme feature vectors of original sample audio, the second data set includes multiple style prosody feature vectors of sample audio to be transferred, and the third data set includes multiple speaker feature vectors of the sample audio to be transferred; a data set processing module, configured to obtain a fourth data set according to the first data set, the second data set and the third data set, where the fourth data set includes a merged vector obtained from a first phoneme feature vector, a second style prosody feature vector and a third speaker feature vector, the phoneme feature vectors include the first phoneme feature vector, the style prosody feature vectors include the second style prosody feature vector, and the speaker feature vectors include the third speaker feature vector; and a training module, configured to train an initial spectrogram decoding network model on the basis of the fourth data set to obtain a target spectrogram decoding network model.

In another embodiment of the present invention, an electronic device is provided. The electronic device includes: at least one processor; and a memory communicatively connected with the at least one processor, where the memory stores at least one instruction executable by the at least one processor, and the at least one instruction is executed by the at least one processor, so as to enable the at least one processor to execute the method for processing audio mentioned above.

In another embodiment of the present invention, a non-transitory computer-readable storage medium storing at least one computer instruction is provided, where the computer instruction is used for enabling a computer to execute the method for processing audio mentioned above.

In another embodiment of the present invention, a computer program product is provided. The computer program product includes a computer program, where when the computer program is executed by a processor, the method for processing audio mentioned above is implemented.

In the present invention, the first target feature vector is obtained from the original audio, where the first target feature vector is used for representing the phoneme feature of the original audio; the second target feature vector and the third target feature vector are obtained from the audio to be transferred, where the second target feature vector is used for representing the style prosody feature of the audio to be transferred, and the third target feature vector is used for representing the speaker feature of the audio to be transferred; then the target spectrogram feature is obtained by performing spectrogram decoding on the first target feature vector, the second target feature vector and the third target feature vector; and finally the target spectrogram feature is converted into target audio. In this way, effective and accurate transfer of audio styles is achieved, and the technical problem of the poor audio style transfer effect in the related art is solved.

Other features of the present invention will be easily understood through the following description.

## Brief Description of the Drawings

Accompanying drawings are used for a better understanding of the solution.
In the drawings:

Fig. 1 is a schematic diagram of an architecture of a model for processing audio according to the related art.
Fig. 2 is a block diagram of a hardware structure of a computer terminal (or a mobile device) for implementing a method for processing audio according to an embodiment of the present invention.
Fig. 3 is a flow chart of a method for processing audio according to an embodiment of the present invention.
Fig. 4 is a schematic diagram of training a style prosody extraction network model according to an embodiment of the present invention.
Fig. 5 is a schematic diagram of a method for processing audio according to an embodiment of the present invention.
Fig. 6 is a flow chart of a method for training a model according to an embodiment of the present invention.
Fig. 7 is a structural block diagram of an apparatus for processing audio according to an embodiment of the present invention.
Fig. 8 is a structural block diagram of an apparatus for training a model according to an embodiment of the present invention.

## Detailed Description

Illustrative embodiments of the present invention are described below in combination with the accompanying drawings and various details of the embodiments of the present invention to facilitate understanding, which should be considered as illustrative. Therefore, those of ordinary skill in the art should note that various changes and modifications may be made to the embodiments described herein, without departing from the scope of the present invention as defined by the appended claims. Likewise, descriptions of well-known functions and structures are omitted in the following description for clarity and conciseness.

It should be noted that the terms "first", "second", etc. in the description and claims of the present invention and in the drawings, are used for distinguishing between similar objects and not necessarily to describe a particular order or sequential order. It should be understood that data used in this way may be interchanged in appropriate cases, such that the embodiments of the present invention described herein may be implemented in a sequence other than those illustrated or described herein. In addition, the terms "include", "have", and any variations thereof are intended to cover non-exclusive inclusions, for example, processes, methods, systems, products, or devices that include a series of steps or units are not necessarily limited to those explicitly listed steps or units, but may include other steps or units not explicitly listed or inherent to these processes, methods, products, or devices.

Generally, audio style transfer and synthesis includes two cases. One case is to combine a specified text with target audio so as to synthesize audio of a speaker that has phoneme of the specified text and a style of the target audio. The other case is to combine a specified audio with target audio so as to synthesize audio of a speaker that has phoneme of the specified audio and a style of the target audio.

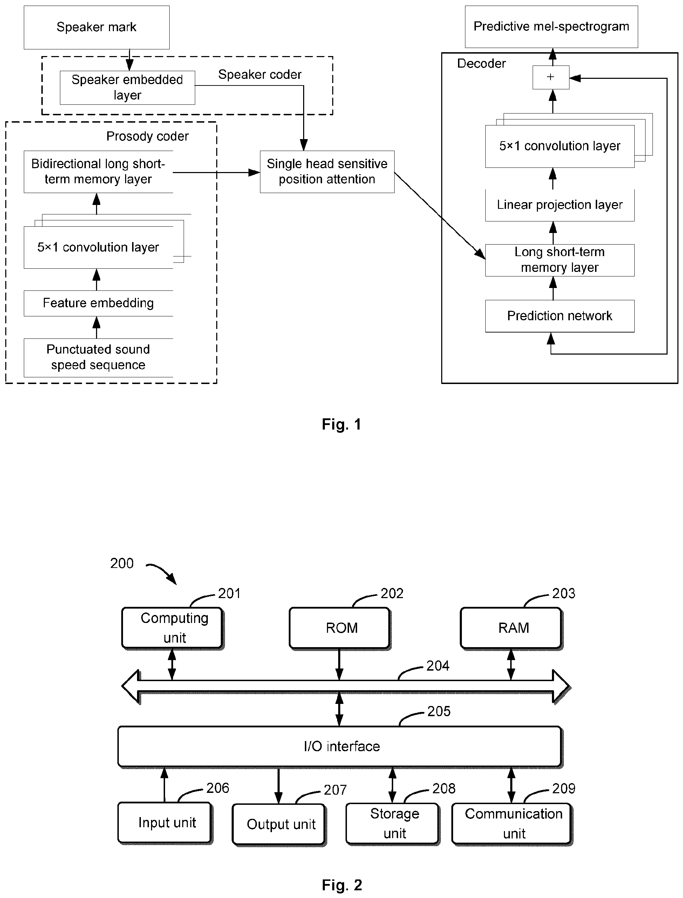

Fig. 1 is a schematic diagram of an architecture of a model for processing audio according to the related art. As shown in Fig. 1, the model for processing audio is capable of transferring an audio style. The model includes phoneme feature extraction, speaker feature extraction, mel-spectrogram feature prediction, and finally conversion from a mel-spectrogram into audio by an existing vocoder. The vocoder herein may be based on machine learning algorithms, such as Griffin-Lim, or on deep learning models, such as WaveNet and WaveRNN. In addition, if a specified audio is provided during style transfer, a voice recognition model is generally required to extract a phoneme of the specified audio, or conventional neural networks such as Long Short-Term Memory (LSTM) and Attention are configured to extract a phoneme feature of the specified audio.

An audio style transfer solution in the related art is a supervised way, and needs to mark an audio text or a speaker, with high marking cost. In this case, a phoneme feature is not completely separated from a speaker feature, such that a transfer effect of an audio style is affected to a certain extent. In addition, the above solution is not accurate enough in extraction of features such as tones and volume in the audio style, and has a limited ability to generalize about multiple speaker features. Therefore, a final transfer effect of an audio style transfer way in the related art is poor.

At least some embodiments of the present invention provide a method and an apparatus for processing audio, an electronic device and a storage medium, so as to at least to partially solve a technical problem of a poor audio style transfer effect in the related art.

An embodiment of the present invention provides a method for processing audio. It should be noted that steps illustrated in flow charts of the accompanying drawings may be executed in a computer system such as a set of computer-executable instructions, and although a logical order is illustrated in the flow charts, in some cases, the steps shown or described may be executed in an order different from that herein.

A method embodiment provided in the embodiment of the present invention may be executed in a mobile terminal, a computer terminal or a similar electronic device. The electronic device is intended to represent various forms of digital computers, such as a laptop computer, a desktop computer, a workstation, a personal digital assistant, a server, a blade server, a mainframe computer, and other suitable computers. The electronic device may also represent various forms of mobile apparatuses, such as a personal digital assistant, a cellular phone, a smart phone, a wearable device and other similar computing apparatuses. The components shown herein, and connections, relations and functions thereof are illustrative, and are not intended to limit implementation of the present invention that is defined by the appended claims.

Fig. 2 shows a block diagram of a hardware structure of a computer terminal (or a mobile device) for implementing a method for processing audio.

As shown in Fig. 2, a computer terminal 200 includes a computing unit 201, which may execute various appropriate actions and processing according to a computer program stored in a read only memory (ROM) 202 or a computer program loaded from a storage unit 208 to a random access memory (RAM) 203. The RAM 203 may further store various programs and data required for operations of the computer terminal 200. The computing unit 201, the ROM 202, and the RAM 203 are connected with one another by means of a bus 204. An input/output (I/O) interface 205 is also connected with the bus 204.

Multiple components in the computer terminal 200 are connected with the I/O interface 205, which include an input unit 206, such as a keyboard or a mouse; an output unit 207, such as various types of displays or speakers; the storage unit 208, such as a magnetic disk or an optical disk; and a communication unit 209, such as a network interface card, a modem, or a wireless communication transceiver. The communication unit 209 allows the computer terminal 200 to exchange information/data with other devices by means of a computer network such as the Internet and/or various telecommunication networks.

The computing unit 201 may be various general-purpose and/or special-purpose processing assemblies having processing and computing abilities. Some examples of the computing unit 201 include, but are not limited to, a central processing unit (CPU), a graphics processing unit (GPU), various special-purpose artificial intelligence (AI) computing chips, various computing units that operate machine learning model algorithms, a digital signal processor (DSP), and any appropriate processor, controller, microcontroller, etc. The computing unit 201 executes the method for processing audio described herein. For example, in some embodiments, the method for processing audio may be implemented as a computer software program, which is tangibly contained in a machine readable medium, such as the storage unit 208. In some embodiments, some or all of computer programs may be loaded into and/or mounted onto the computer terminal 200 via the ROM 202 and/or the communication unit 209. When the computer program is loaded to the RAM 203 and executed by the computing unit 201, at least one step of the method for processing audio described herein may be executed. Alternatively, in other embodiments, the computing unit 201 may be configured, by any other suitable means (for example, by means of firmware), to execute the method for processing audio.

Various implementations of systems and technologies described in the present invention may be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. All the implementations may include: an implementation in at least one computer program, which may be executed and/or interpreted on a programmable system including at least one programmable processor, the programmable processor may be a special-purpose or general-purpose programmable processor and capable of receiving and transmitting data and an instruction from and to a storage system, at least one input apparatus, and at least one output apparatus.

It should be noted herein that in some optional embodiments, the electronic device shown in Fig. 2 may include hardware elements (including a circuit), software elements (including computer codes stored on computer-readable media), or a combination of both hardware elements and software elements. It should be noted that Fig. 2 is one example in specific examples, and is intended to show types of components that may exist in the above-described electronic device.

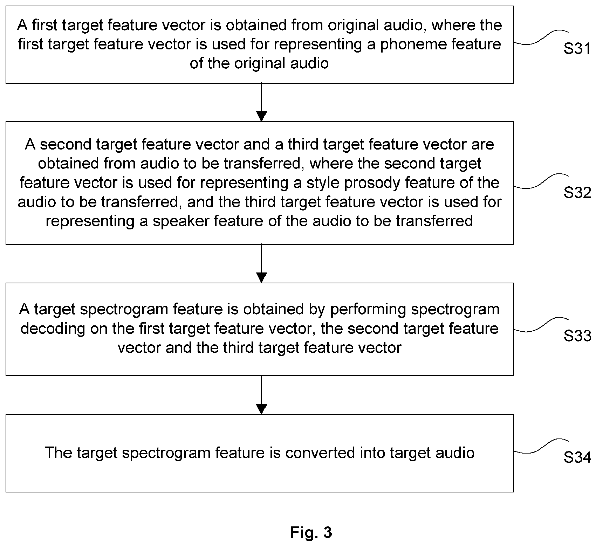

Under the above-described operating environment, the present invention provides a method for processing audio as shown in Fig. 3. The method may be executed by a computer terminal or a similar electronic device as shown in Fig. 2. Fig. 3 is a flow chart of a method for processing audio according to an embodiment of the present invention. As shown in Fig. 3, the method may include the following steps.

In step S31, a first target feature vector is obtained from original audio, where the first target feature vector is used for representing a phoneme feature of the original audio.

The original audio is capable of providing an audio phoneme for a finally-synthesized target audio.

Specifically, an implementation process of obtaining the first target feature vector from the original audio may refer to the further introduction of the embodiment of the present invention, which will not be repeated herein.

In step S32, a second target feature vector and a third target feature vector are obtained from audio to be transferred, where the second target feature vector is used for representing a style prosody feature of the audio to be transferred, and the third target feature vector is used for representing a speaker feature of the audio to be transferred.

The audio to be transferred is capable of providing an audio style prosody and speaker information for the finally-synthesized target audio, where the audio style prosody includes tones and volume.

Specifically, an implementation process of obtaining the second target feature vector and the third target feature vector from the audio to be transferred may refer to the further introduction of the embodiment of the present invention, which will not be repeated herein.

In step S33, a target spectrogram feature is obtained by performing spectrogram decoding on the first target feature vector, the second target feature vector and the third target feature vector.

Specifically, an implementation process of obtaining the target spectrogram feature by performing spectrogram decoding on the first target feature vector, the second target feature vector and the third target feature vector may refer to the further introduction of the embodiment of the present invention, which will not be repeated herein.

In step S34, the target spectrogram feature is converted into target audio.

According to step S31-step S34 of the present invention, the first target feature vector is obtained from the original audio, where the first target feature vector is used for representing the phoneme feature of the original audio; the second target feature vector and the third target feature vector are obtained from the audio to be transferred, where the second target feature vector is used for representing the style prosody feature of the audio to be transferred, and the third target feature vector is used for representing the speaker feature of the audio to be transferred; then the target spectrogram feature is obtained by performing spectrogram decoding on the first target feature vector, the second target feature vector and the third target feature vector; and finally the target spectrogram feature is converted into the target audio. In this way, effective and accurate transfer of audio styles is achieved, and a technical problem of a poor audio style transfer effect in the related art is solved.

The method for processing audio of the embodiment will be further described below.

As an optional implementation, in step S31, the step that a first target feature vector is obtained from original audio includes the following steps.

In step S311, the first target feature vector is obtained by performing phoneme feature extraction on a first audio feature of the original audio by means of a phoneme feature extraction network model.

The first audio feature is mel bank features of the original audio, where the first audio feature includes information such as speaker moods, ages, and speaking phonemes.

Specifically, the phoneme feature extraction network model includes five convolution layers, an instance normalization (IN) layer, a vector quantization (VQ) layer and a contrastive predictive coding (CPC) layer. An activation function of each convolution layer is a rectified linear unit (ReLU).

As an optional implementation, in step S311, the step that the first target feature vector is obtained by performing phoneme feature extraction on a first audio feature of the original audio by means of a phoneme feature extraction network model includes the following steps.

With the phoneme feature extraction network model, the following steps are executed:

In step S3111, a first intermediate feature vector is obtained by performing convolution on the first audio feature.

In step S3112, a second intermediate feature vector is obtained by performing instance normalization on the first intermediate feature vector.

In step S3113, a third intermediate feature vector is obtained by performing vector quantization on the second intermediate feature vector.

In step S3114, the first target feature vector is obtained by performing contrastive predictive coding on the third intermediate feature vector.

Specifically, the first intermediate feature vector $E=\{e_1, e_2, \ldots, e_T\}$ is obtained by performing convolution on the first audio feature, then the second intermediate feature vector after instance normalization is obtained by performing normalization on each dimension of the first intermediate feature vector $E=\{e_1, e_2, \ldots, e_T\}$ by means of the IN layer, and then the discretized third intermediate feature vector $Q=\{q_1, q_2, \ldots, q_T\}$ is obtained by performing vector quantization on the second intermediate feature vector by means of the VQ layer. Finally, in order to further remove the speaker information, such as moods and ages, the first target feature vector is obtained by performing contrastive predictive coding on the third intermediate feature vector $Q=\{q_1, q_2, \ldots, q_T\}$ by means of the CPC layer. Through contrastive predictive coding by the CPC layer, the phoneme feature extraction network model may learn more local structure information, and discard low-level information and noise at the bottom, so as to obtain more accurate phoneme features.

In the IN layer, assuming that all dimensions in a space are independent of each other, each dimension is subjected to normalization separately. For example, for the first intermediate feature vector input to the IN layer, a mean and a variance are computed from different dimensions, and then instance normalization is performed to obtain the second intermediate feature vector. A computation process of normalization is as shown in Formulas (1)-(3):

$$M_c'[w] = \frac{M_c[w] - \mu_c}{\sigma_c} \qquad \text{Formula (1)}$$

$$\mu_c = \frac{1}{W} \sum_{w=1}^{W} M_c[w] \qquad \text{Formula (2)}$$

$$\sigma_c = \sqrt{\frac{1}{W} \sum_{w=1}^{W} (M_c[w] - \mu_c)^2 + \varepsilon} \qquad \text{Formula (3)}$$

$\varepsilon$ is a very small constant, and is configured to avoid computational instability. $M_c'[w]$ represents an output result of one of channels of the convolution layer, that is, a w-th dimensional result in a W-dimensional vector. $\mu_c$ is a mean of W-dimensional vectors output from the channel. $\sigma_c$ is a standard deviation of the W-dimensional vectors output from the channel.

Based on step S3111-step S3114, the phoneme feature of the original audio may be obtained rapidly and accurately by performing phoneme feature extraction on the first audio feature of the original audio by means of the phoneme feature extraction network model.

As an optional implementation, the method for processing audio further includes the following steps.

In step S41, a first processing result is obtained by performing gradient stop on the first intermediate feature vector.

In step S42, a first Euclidean distance between the first processing result and the third intermediate feature vector in a two-dimensional Euclidean space is computed.

In step S43, a second processing result is obtained by performing gradient stop on the third intermediate feature vector.

In step S44, a second Euclidean distance between the first intermediate feature vector and the second processing result in the two-dimensional Euclidean space is computed.

In step S45, a first loss is determined according to the first Euclidean distance and the second Euclidean distance.

In step S46, network model parameters are updated according to the first loss, where the network model parameters include model parameters of the phoneme feature extraction network model.

Specifically, there is a preset codebook $Q^V$ in the VQ layer, and $Q^V$ contains V coding vectors. The first intermediate feature vector E selects a closest coding vector in the codebook according to an Euclidean distance, and the first intermediate feature vector E changes to the third intermediate feature vector Q, such that a feature vector may be compressed into a more compact space, so as to remove unimportant information and retain basic linguistic information.

The first loss $L_{vq}$ is determined according to the first intermediate feature vector $E=\{e_1, e_2, \ldots, e_T\}$ and the third intermediate feature vector $Q=\{q_1, q_2, \ldots, q_T\}$ according to the following Formula (4):

$$L_{vq} = \| sg[IN(E)] - Q \|_2^2 + \beta \| IN(E) - sg[Q] \|_2^2 \qquad \text{Formula (4)}$$

sg represents stop-gradient that is configured to prevent network model collapse during training. $\| sg[IN(E)] - Q \|_2^2$ is the first Euclidean distance between the first processing result and the third intermediate feature vector in the two-dimensional Euclidean space. The first Euclidean distance is configured to update the codebook. $\| IN(E) - sg[Q] \|_2^2$ is the second Euclidean distance between the first intermediate feature vector and the second processing result in the two-dimensional Euclidean space. The second Euclidean distance is configured to limit arbitrariness of input growth. $\beta$ is 0.25, and is configured to adjust weights of the $\| sg[IN(E)] - Q \|_2^2$ and $\| IN(E) - sg[Q] \|_2^2$. The model parameters of the phoneme feature extraction network model may be updated according to the first loss, such that more accurate original audio phoneme features may be obtained by means of the phoneme feature extraction network model.

Based on step S41-step S46, the first processing result is obtained by performing gradient stop on the first intermediate feature vector, and then the first Euclidean distance between the first processing result and the third intermediate feature vector in the two-dimensional Euclidean space is computed; then the second processing result is obtained by performing gradient stop on the third intermediate feature vector, and then the second Euclidean distance between the first intermediate feature vector and the second processing result in the two-dimensional Euclidean space is computed; and finally, the first loss is determined according to the first Euclidean distance and the second Euclidean distance, a quantitative loss may be rapidly and accurately computed, and the network model parameters are updated rapidly according to the first loss.

As an optional implementation, the method for processing audio further includes the following stpes.

In step S51, a context vector is obtained on the basis of the third intermediate feature vector.

In step S52, a predictive vector is obtained by using the context vector by means of at least one linear predictor.

In step S53, within a value range determined on the basis of a target quantity, a first operation result is obtained by performing a first exponential operation on a third intermediate feature and the predictive vector, and a second operation result is obtained by performing a second exponential operation on the third intermediate feature and the predictive vector, where the target quantity is a quantity of the at least one linear predictor.

In step S54, a second loss is determined by performing a logarithm operation on the first operation result and the second operation result.

In step S55, the network model parameters are updated according to the second loss, where the network model parameters include model parameters of the phoneme feature extraction network model.

Specifically, in the CPC layer, based on the third intermediate feature vector Q, the context vector $C=\{c_1, c_2, \ldots, c_T\}$ is obtained by means of an LSTM layer, then the predictive vector Z is obtained by means of K (K=20) linear predictors, and similarity between the third intermediate feature vector Q and the predictive vector Z is computed for comparison, so as to improve discrimination between the third intermediate feature vectors Q, and remove speaker features.

The predictive vector is obtained by using the context vector by means of K linear predictors. For each of K linear predictors, the second loss $L_{cpc}$ is determined by using the third intermediate feature $Q=\{q_1, q_2, \ldots, q_T\}$, the predictive vector Z and the target quantity K according to the following Formula (5):

$$L_{cpc} = \frac{1}{K} \sum_{k=1}^{K} \log \frac{\exp(dot(\mathrm{Pr}ed^k(c_t), q_{t+k}))}{\sum_{n \in N_q} \exp(dot(\mathrm{Pr}ed^k(c_t), q_n))} \qquad \text{Formula (5)}$$

$\exp(dot(\text{Pr}\,ed^k\,(c_t),q_{t+k}))$ being the first operation result obtained by performing the first exponential operation on the third intermediate feature and the predictive vector, and $\exp(dot(\text{Pr}\,ed^k\,(c_t),q_n))$ being the second operation result obtained by performing the second exponential operation on the third intermediate feature and the predictive vector.

Optionally, model parameters of the phoneme feature extraction network model may be updated according to the second loss.

Optionally, model parameters of the phoneme feature extraction network model may be updated according to the first loss and the second loss.

Based on In step S51-In step S55, the second loss in the phoneme feature extraction network model may be determined rapidly according to the third intermediate feature, the predictive vector and the target quantity, so as to rapidly update model parameters of the phoneme feature extraction network model.

As an optional implementation, the method for processing audio further includes the following steps.

In step S61, a first initial feature vector is obtained by performing speaker feature coding on the first intermediate feature vector and the third intermediate feature vector.

Optionally, the first initial feature vector is obtained by performing speaker feature coding on the first intermediate feature vector and the third intermediate feature vector by means of a speaker coding network model.

Specifically, the speaker coding network model includes a convolution layer, an average-pooling layer and a linear layer. The speaker coding network model is capable of expanding a receptive field by means of a ConvBank layer, capturing long-term information, and finally, aggregating information features of the whole sentence by means of a pooling layer, so as to obtain the first initial feature vector to represent the speaker feature S. An input of the speaker coding network model is a difference between the first intermediate feature vector E and the third intermediate feature vector Q. The first intermediate feature vector E includes the speaker feature, and the third intermediate feature vector Q includes no speaker feature. The difference between the first intermediate feature vector E and the third intermediate feature vector Q is used for speaker feature coding, so as to facilitate removal of phoneme information and obtain a more accurate first initial feature vector, which is the speaker feature S.

The speaker coding network model is mainly to model features of a speaker identity. Speaking features of a speaker are composed of conscious and unconscious activities, and are generally highly variable.

From the perspective of spectrograms, the features have 3 categories. One category includes inherent stable coarse granularity features, which is determined by a physiological structure feature of a speaker. Different speakers have different features, and have different feelings from subjective hearing. The differences are mainly in low frequency regions of spectrograms. The features includes, for example, an average pitch, a spectral envelope reflecting a vocal tract impulse response, a relative amplitude and a position of a formant, etc.

Another category includes unstable short-term acoustic features, such as sharp and rapid pronunciation, a pitch, an intensity, and a refined structure of a frequency spectrum. The features may reflect psychological or mental changes of a speaker, may be changed to express different moods and intentions during conversation, and may greatly affect the sense of hearing.

The last category includes stress, pause and other features which is irrelevant to the speaker, but also certainly affect subjective hearing.

The speaker features are complex and difficult to describe. The speaker coding network model in the present invention is capable of extracting features of different levels by means of multilayer convolution networks, and then synthesizing the features, so as to obtain accurate speaker features.

In step S62, a second initial feature vector is obtained by performing style prosody feature extraction on the first intermediate feature vector.

Optionally, the second initial feature vector is obtained by performing style prosody feature extraction on the first intermediate feature vector by means of a style prosody extraction network model.

In step S63, a predictive spectrogram feature is obtained by performing spectrogram decoding on the first initial feature vector, the second initial feature vector and the third intermediate feature vector by means of a spectrogram decoding network model.

The spectrogram decoding network model includes a convolution layer, a batch normalization (BN) layer, an LSTM layer and a linear layer. The predictive spectrogram feature is obtained by performing merging on the first initial feature vector, the second initial feature vector and the third intermediate feature vector by means of the spectrogram decoding network model. Before merging, it is necessary to copy the first initial feature vector and the second initial feature vector according to an audio length. For example, when the audio length is T frames, the first initial feature vector and the second initial feature vector are copied repeatedly until T frames are reached.

For example, the first initial feature vector S is obtained by performing speaker feature coding on the first intermediate feature vector E and the third intermediate feature vector Q. The second initial feature vector $\psi$ is obtained by performing style prosody feature extraction on the first intermediate feature vector. The predictive spectrogram feature is obtained by performing spectrogram decoding on the first initial feature vector S, the second initial feature vector $\psi$ and the third intermediate feature vector Q by means of the spectrogram decoding network model.

In step S64, a third Euclidean distance between the predictive spectrogram feature and a real spectrogram feature in a one-dimensional Euclidean space is computed, and a fourth Euclidean distance between the predictive spectrogram feature and the real spectrogram feature in the two-dimensional Euclidean space is computed.

In step S65, a third loss is determined according to the third Euclidean distance and the fourth Euclidean distance.

In step S66, the network model parameters are updated according to the third loss, where the network model parameters include model parameters of the phoneme feature extraction network model and/or model parameters of the spectrogram decoding network model.

Specifically, the third loss is computed according to a first-order norm and a second-order norm, and then a spectrogram decoding network model parameter is reversely updated according to the third loss.

The third loss $L_{rec}$ is determined according to the predictive spectrogram feature $\hat{I}$ and the real spectrogram feature $I$ according to the following Formula (6):

$$L_{rec} = \|\, I - \hat{I} \,\|_1^1 + \|\, I - \hat{I} \,\|_2^2 \qquad \text{Formula (6)}$$

$\|\, I - \hat{I} \,\|_1^1$ being the third Euclidean distance between the predictive spectrogram feature $\hat{I}$ and the real spectrogram feature $I$ in the one-dimensional Euclidean space, and $\|\, I - \hat{I} \,\|_2^2$ being the fourth Euclidean distance between the predictive spectrogram feature $\hat{I}$ and the real spectrogram feature $I$ in the two-dimensional Euclidean space.

Optionally, the network model parameters are updated according to at least one of the first loss, the second loss and the third loss, where the network model parameters include at least one of a phoneme feature extraction network model parameter and the spectrogram decoding network model parameter.

For example, at least one of the phoneme feature extraction network model parameter and the spectrogram decoding network model parameter is updated according to the third loss; or, at least one of the phoneme feature extraction network model parameter and the spectrogram decoding network model parameter is updated according to the first loss and the third loss; or, at least one of the phoneme feature extraction network model parameter and the spectrogram decoding network model parameter is updated according to the second loss and the third loss; or, at least one of the phoneme feature extraction network model parameter and the spectrogram decoding network model parameter is updated according to the first loss, the second loss and the third loss.

Specifically, according to the first loss $L_{vq}$, the second loss $L_{cpc}$ and the third loss $L_{rec}$, a loss function of an audio style transfer network model is determined according to the following Formula (7):

$$L_{vc} = L_{rec} + L_{vq} + L_{cpc} \qquad \text{Formula (7)}$$

At least one of the phoneme feature extraction network model parameter and the spectrogram decoding network model parameter is updated on the basis of the loss function of the audio style transfer network model.

Based on the optional embodiments, model parameters of the phoneme feature extraction network model and/or model parameters of the spectrogram decoding network model may be updated according to at least one of the first loss, the second loss and the third loss, and then performance of a network model may be further optimized, so as to improve an audio style transfer effect.

Based on step S61-step S66, a loss function rebuilt for spectrograms may be rapidly obtained, and model parameters of the phoneme feature extraction network model and/or model parameters of the spectrogram decoding network model may be updated rapidly according to the third loss.

As an optional implementation, in step S32, the step that a second target feature vector is obtained from audio to be transferred includes that the second target feature vector is obtained by performing style prosody feature extraction on a second audio feature of the audio to be transferred by means of the style prosody extraction network model.

Specifically, with the style prosody extraction network model, the following steps are executed:

In step S321, an adjusted first audio is obtained by performing adjustment on a style prosody feature of the audio to be transferred.

The style prosody feature of the audio to be transferred includes at least one of tones and volume of the audio to be transferred. The adjustment includes enhancement or attenuation of the audio to be transferred, where adjustment of the tone or volume of the audio to be transferred may be performed alternately.

Optionally, the tone of the audio to be transferred is enhanced, and the volume of the audio to be transferred is not adjusted, so as to obtain an adjusted audio.

Optionally, the tone of the audio to be transferred is not adjusted, and the volume of the audio to be transferred is enhanced, so as to obtain an adjusted audio.

Optionally, the tone of the audio to be transferred is enhanced, and the volume of the audio to be transferred is adjusted, so as to obtain an adjusted audio.

In step S322, a target ranking probability corresponding to a Mel-spectrum feature of the adjusted audio is determined, where the target ranking probability is used for determining a Mel-spectrum feature adjustment way of the adjusted audio.

The Mel-spectrum feature adjustment way includes, but is not limited to, one of the following ways:

a first way in which the Mel-spectrum feature of the adjusted audio is enhanced;

a second way in which the Mel-spectrum feature of the adjusted audio is attenuated; and

a third way in which the Mel-spectrum feature of the adjusted audio is kept unchanged.

Specifically, in a training process of the style prosody extraction network model, any of the adjustment ways is randomly configured to adjust the Mel-spectrum feature.

In step S323, based on the target ranking probability, the second target feature vector is obtained by performing style prosody feature extraction on the second audio feature of the audio to be transferred and a third audio feature of the adjusted audio by means of the style prosody extraction network model.

Specifically, the second audio feature X is a Mel-spectrum feature extracted from the audio to be transferred. The third audio feature $X_{aug}$ is a Mel-spectrum feature extracted from the adjusted audio. The target ranking probability is $< \tau_p, \tau_v >$, where $\tau_p$ is a target ranking probability of tones and $\tau_v$ is a target ranking probability of volume. In an optional embodiment, when the target ranking probability is 0.5 (that is, $\tau_p$ and $\tau_v$ are both 0.5), it is indicated that the Mel-spectrum feature extracted from the adjusted audio is kept unchanged. When the target ranking probability is 0 (that is, at least one of $\tau_p$ and $\tau_v$ gradually decreases from 0.5), it is indicated that the Mel-spectrum feature extracted from the adjusted audio is attenuated. When the target ranking probability is 1 (that is, at least one of $\tau_p$ and $\tau_v$ gradually increases from 0.5), it is indicated that the Mel-spectrum feature extracted from the adjusted audio is enhanced.

After the target ranking probability is obtained, the target ranking probability, the second audio feature of the audio to be transferred and the third audio feature of the adjusted audio are set as input parameters of the style prosody extraction network model, the style prosody extraction network model is configured to perform style prosody feature extraction, so as to output an audio attribute strength ranking prediction probability, then the second target feature vector is obtained, and finally the style prosody extraction network model is trained.

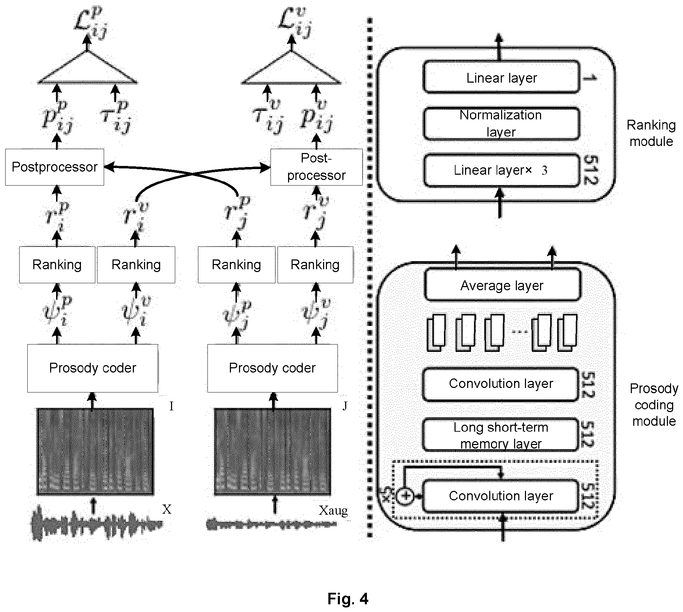

Fig. 4 is a schematic diagram of training a style prosody extraction network model according to an embodiment of the present invention. As shown in Fig. 4, the style prosody extraction network model includes a prosody coding module and a ranking module. The prosody coding module includes a convolution layer, an LSTM layer, and an average layer. The ranking module includes a linear layer and a normalization layer. The ranking module extracts more accurate depth relative attributes, requires no labels, and uses a form of complete self-supervision, thus saving marking cost.

Specifically, an open source data set in an audio field is configured to pre-train an initial style prosody extraction network model, such as an LJSpeech data set or a voice cloning toolkit (VCTK) data set. Data features of VCTK are more abundant. The loss function of the style prosody extraction network model is binary cross entropy (BCE). Specifically, $L_{prosody}$ may be computed according to the following Formulas (8)-(10):

$$L_{prosody} = \sum_{pro \in \{p,v\}} L_{ij}^{pro}$$ Formula (8)

$$L_{ij}^{pro} = -\tau_{ij} \log(p_{ij}^{pro}) - (1 - \tau_{ij}) \log(1 - p_{ij}^{pro})$$ Formula (9)

$$p_{ij}^{pro} = \frac{1}{1 + e^{-(r_i^{pro} - r_j^{pro})}}$$ Formula (10)

r is an output of the ranking module, and indicates a corresponding attribute strength, and p is a score obtained through post-processing, and indicates comparison of two same attribute strengths, that is, measurement of comparison degrees of tones or volume between the second audio feature X and the third audio feature $X_{aug}$.

The $L_{prosody}$ is configured to reversely update the initial style prosody extraction network model, and the target style prosody extraction network model is obtained through iteration for multiple cycles until the style prosody extraction network model converges.

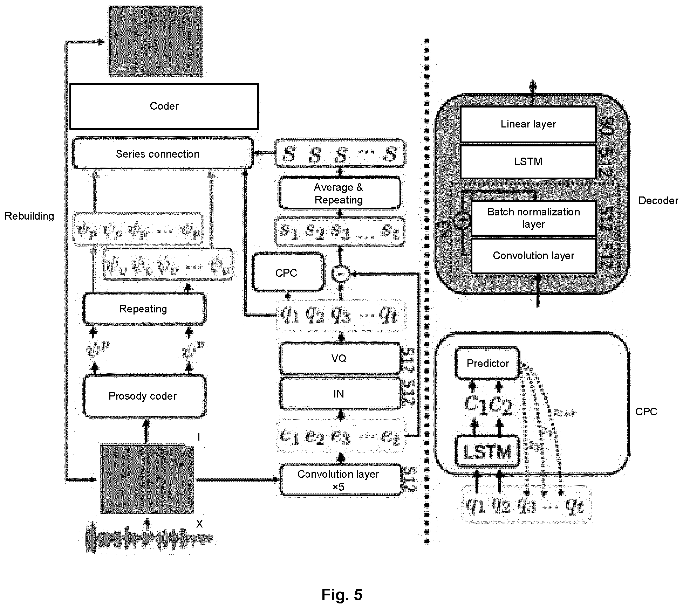

Fig. 5 is a schematic diagram of a method for processing audio according to an embodiment of the present invention. As shown in Fig. 5, factors related to audio style transfer are divided into three parts: phoneme features, style prosody features and speaker features. The phoneme feature extraction network model is configured to perform phoneme feature extraction on the Mel-spectrum feature X of the original audio, so as to obtain the phoneme feature. The style prosody extraction network model is configured to obtain the style prosody feature from the audio to be transferred. The speaker coding network model is configured to obtain the speaker feature. The phoneme features, style prosody features and speaker features are fused to obtain the target spectrogram feature by means of the spectrogram decoding network model (that is, a decoder), and then the target spectrogram feature is converted into the target audio, so as to obtain a desirable style transfer effect.

In practical use, audio having target speaker features may be synthesized by replacing style prosody features and speaker features, such that an ability of the audio style transfer model to generalize about unknown speaker features is improved.

As an optional implementation, in step S32, the step that a third target feature vector is obtained from audio to be transferred includes:

In step S324, a third initial feature vector and a fourth intermediate feature vector are obtained by performing phoneme feature extraction on a second audio feature of the audio to be transferred, where the third initial feature vector is used for representing a convolution result of the second audio feature, and the fourth intermediate feature vector is used for representing a vector quantization result of the second audio feature.

Specifically, the third initial feature vector and the fourth intermediate feature vector are obtained by performing phoneme feature extraction on the second audio feature of the audio to be transferred by means of the phoneme feature extraction network model. For example, the third initial feature vector is obtained by processing the second audio feature by means of the convolution layer in the phoneme feature extraction network model, then a result after instance normalization is obtained by performing normalization on each dimension of the third initial feature vector by means of the IN layer, and finally a discretized fourth intermediate feature vector is obtained by performing vector quantization on a result after normalization by means of the VQ layer.

In step S325, the third target feature vector is obtained by performing speaker feature coding on the third initial feature vector and the fourth intermediate feature vector.

Based on step S324-step S325, the third initial feature vector and the fourth intermediate feature vector are obtained by performing phoneme feature extraction on the second audio feature of the audio to be transferred, and then the third target feature vector may be accurately obtained from the audio to be transferred by performing speaker feature coding on the third initial feature vector and the fourth intermediate feature vector.

As an optional implementation, in step S33, the step that a target spectrogram feature is obtained by performing spectrogram decoding on the first target feature vector, the second target feature vector and the third target feature vector includes the following steps.

In step S331, a merged vector is obtained by performing merging on the first target feature vector, the second target feature vector and the third target feature vector.

In step S332, the target spectrogram feature is obtained by performing spectrogram decoding on the merged vector.

Based on step S331-step S332, the merged vector is obtained by performing merging on the first target feature vector, the second target feature vector and the third target feature vector, and then the target spectrogram feature is obtained by performing spectrogram decoding on the merged vector, such that the target audio corresponding to the audio to be transferred may be converted into according to the target spectrogram feature.

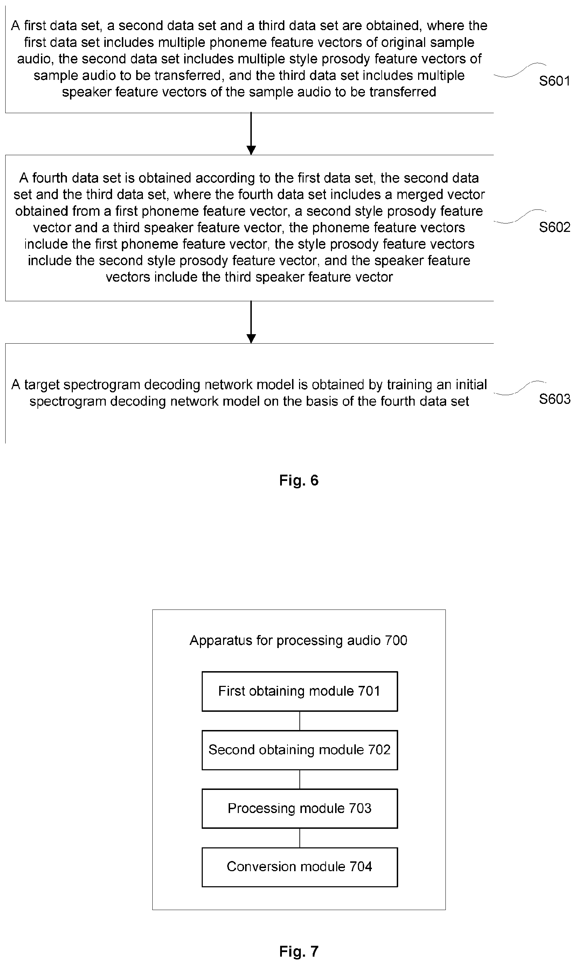

An embodiment of the present invention further provides a method for training a model. Fig. 6 is a flow chart of a method for training a model provided in an embodiment of the present invention. The method may include the following steps.

In step S601, a first data set, a second data set and a third data set are obtained, where the first data set includes multiple phoneme feature vectors of original sample audio, the second data set includes multiple style prosody feature vectors of sample audio to be transferred, and the third data set includes multiple speaker feature vectors of the sample audio to be transferred.

In step S602, a fourth data set is obtained according to the first data set, the second data set and the third data set, where the fourth data set includes a merged vector obtained from a first phoneme feature vector, a second style prosody feature vector and a third speaker feature vector, the phoneme feature vectors include the first phoneme feature vector, the style prosody feature vectors include the second style prosody feature vector, and the speaker feature vectors include the third speaker feature vector.

In step S603, a target spectrogram decoding network model is obtained by training an initial spectrogram decoding network model on the basis of the fourth data set.

Specifically, the target spectrogram decoding network model is obtained by updating model parameters of the initial spectrogram decoding network model according to at least one of the first loss, the second loss and the third loss.

Based on step S601-step S603, the first data set, the second data set and the third data set are obtained, where the first data set includes multiple phoneme feature vectors of the original sample audio, the second data set includes multiple style prosody feature vectors of the sample audio to be transferred, and the third data set includes multiple speaker feature vectors of the sample audio to be transferred; the fourth data set is obtained according to the first data set, the second data set and the third data set, where the fourth data set includes the merged vector obtained from the first phoneme feature vector, the second style prosody feature vector and the third speaker feature vector, the phoneme feature vectors include the first phoneme feature vector, the style prosody feature vectors include the second style prosody feature vector, and the speaker feature vectors include the third speaker feature vector; and finally the target spectrogram decoding network model is obtained by training the initial spectrogram decoding network model on the basis of the fourth data set. Therefore, a mature network model may be obtained by training an initial network model on the basis of different data sets, and then a desirable audio style transfer effect may be obtained by means of the mature network model.

In the technical solution of the present invention, collecting, storage, using, processing, transmission, providing, disclosing, etc. of personal information of a user all conform to provisions of relevant laws and regulations, and do not violate public order and good customs.

From the description of the implementations, it may be apparent to those skilled in the art that the methods according to the above-described embodiments may be implemented by means of software plus a necessary general-purpose hardware platform, and certainly may also be implemented by means of hardware, but in many cases the former is a better implementation. With such understanding, the technical solution of the present invention, in essence or from the view of part contributing to the prior art, may be embodied in the form of a software product. The computer software product is stored in a storage medium and includes several instructions used for enabling a terminal device (which may be a mobile phone, a computer, a server, a network device, etc.) to execute the method in each of the embodiments of the present invention.

The present invention further provides an apparatus for processing audio. The apparatus is configured to implement the embodiments and the preferred implementations, and the illustrative contents will not be repeated herein. As used below, the term "module" may achieve a combination of software and/or hardware having predetermined functions. While the apparatus described in the following embodiments is preferably achieved in software, achievement of hardware, or a combination of software and hardware, is also possible and conceivable.

Fig. 7 is a structural block diagram of an apparatus for processing audio according to an embodiment of the present invention. As shown in Fig. 7, an apparatus 700 for processing audio includes:

a first obtaining module 701 configured to obtain a first target feature vector from original audio, where the first target feature vector is used for representing a phoneme feature of the original audio;

a second obtaining module 702 configured to obtain a second target feature vector and a third target feature vector from audio to be transferred, where the second target feature vector is used for representing a style prosody feature of the audio to be transferred, and the third target feature vector is used for representing a speaker feature of the audio to be transferred;

a processing module 703 configured to perform spectrogram decoding on the first target feature vector, the second target feature vector and the third target feature vector to obtain a target spectrogram feature; and

a conversion module 704 configured to convert the target spectrogram feature into target audio.

Optionally, the first obtaining module 701 is further configured to: perform phoneme feature extraction on a first audio feature of the original audio by means of a phoneme feature extraction network model to obtain the first target feature vector.

Optionally, the first obtaining module 701 is further configured to: perform convolution on the first audio feature to obtain the first intermediate feature vector; perform instance normalization on the first intermediate feature vector to obtain a second intermediate feature vector; perform vector quantization on the second intermediate feature vector to obtain a third intermediate feature vector; and perform contrastive predictive coding on the third intermediate feature vector to obtain the first target feature vector.

Optionally, the processing module 703 is further configured to: perform gradient stop on the first intermediate feature vector to obtain a first processing result; compute a first Euclidean distance between the first processing result and the third intermediate feature vector in a two-dimensional Euclidean space; perform gradient stop on the third intermediate feature vector to obtain a second processing result; compute a second Euclidean distance between the first intermediate feature vector and the second processing result in the two-dimensional Euclidean space; determine a first loss according to the first Euclidean distance and the second Euclidean distance; and update network model parameters according to the first loss, where the network model parameters include model parameters of the phoneme feature extraction network model.

Optionally, the apparatus 700 for processing audio further includes: a third obtaining module 705 configured to obtain a context vector on the basis of the third intermediate feature vector; and a prediction module 706 configured to obtain a predictive vector by using the context vector by means of at least one linear predictor, where the processing module 703 is further configured to, within a value range determined on the basis of a target quantity, perform a first exponential operation on a third intermediate feature and the predictive vector to obtain a first operation result, and perform a second exponential operation on the third intermediate feature and the predictive vector to obtain a second operation result, where the target quantity is a quantity of the at least one linear predictor; the processing module 703 is further configured to perform a logarithm operation on the first operation result and the second operation result to determine a second loss; and the processing module 703 is further configured to update the network model parameters according to the second loss, where the network model parameters include model parameters of the phoneme feature extraction network model.

Optionally, the apparatus 700 for processing audio further includes: a coding module 707 configured to perform speaker feature coding on the first intermediate feature vector and the third intermediate feature vector to obtain a first initial feature vector; an extraction module 708 configured to perform style prosody feature extraction on the first intermediate feature vector to obtain a second initial feature vector; and a decoding module 709 configured to perform spectrogram decoding on the first initial feature vector, the second initial feature vector and the third intermediate feature vector by means of a spectrogram decoding network model to obtain a predictive spectrogram feature, where the processing module 703 is further configured to compute a third Euclidean distance between the predictive spectrogram feature and a real spectrogram feature in a one-dimensional Euclidean space, and compute a fourth Euclidean distance between the predictive spectrogram feature and the real spectrogram feature in the two-dimensional Euclidean space; the processing module 703 is further configured to determine a third loss according to the third Euclidean distance and the fourth Euclidean distance; and the processing module 703 is further configured to update the network model parameters according to the third loss, where the network model parameters include model parameters of the phoneme feature extraction network model and/or model parameters of the spectrogram decoding network model.

Optionally, the second obtaining module 702 is further configured to:
perform phoneme feature extraction on a second audio feature of the audio to be transferred to obtain a third initial feature vector and a fourth intermediate feature vector, wherein the third initial feature vector is used for representing a convolution result of the second audio feature, and the fourth intermediate feature vector is used for representing a vector quantization result of the second audio feature; and perform speaker feature coding on the third initial feature vector and the fourth intermediate feature vector to obtain the third target feature vector.

Optionally, the processing module 703 is further configured to: perform merging on the first target feature vector, the second target feature vector and the third target feature vector to obtain a merged vector; and perform spectrogram decoding on the merged vector to obtain the target spectrogram feature.

It should be noted that above-described various modules may be achieved by software or hardware, achievement by hardware may be implemented as follows but are not limited thereto: the above-described modules are located in the same processor; or the above-described modules are separately located in different processors in any combination form.

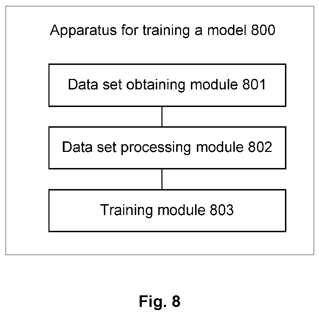

According to an embodiment of the present invention, the present invention further provides an apparatus for training a model. Fig. 8 is a structural block diagram of an apparatus for training a model according to an embodiment of the present invention. As shown in Fig. 8, the apparatus 800 for training a model includes:

a data set obtaining module 801 configured to obtain a first data set, a second data set and a third data set, where the first data set includes multiple phoneme feature vectors of original sample audio, the second data set includes multiple style prosody feature vectors of sample audio to be transferred, and the third data set includes multiple speaker feature vectors of the sample audio to be transferred;

a data set processing module 802 configured to obtain a fourth data set according to the first data set, the second data set and the third data set, where the fourth data set includes a merged vector obtained from a first phoneme feature vector, a second style prosody feature vector and a third speaker feature vector, the phoneme feature vectors include the first phoneme feature vector, the style prosody feature vectors include the second style prosody feature vector, and the speaker feature vectors include the third speaker feature vector; and

a training module 803 configured to train an initial spectrogram decoding network model on the basis of the fourth data set to obtain a target spectrogram decoding network model.

According to an embodiment of the present invention, the present invention further provides an electronic device, which includes a memory and at least one processor. The memory is configured to store at least one computer instruction, and the processor is configured to run the at least one instruction to execute the steps of the above-described method embodiments.

Optionally, the electronic device may further include a transmission device and an input/output device, where the transmission device is connected with the processor, and the input/output device is connected with the processor.

Optionally, in the present invention, the processor may be configured to execute, by means of a computer program, the following steps.

In step S1, a first target feature vector is obtained from original audio, where the first target feature vector is used for representing a phoneme feature of the original audio.

In step S2, a second target feature vector and a third target feature vector are obtained from audio to be transferred, where the second target feature vector is used for representing a style prosody feature of the audio to be transferred, and the third target feature vector is used for representing a speaker feature of the audio to be transferred.

In step S3, a target spectrogram feature is obtained by performing spectrogram decoding on the first target feature vector, the second target feature vector and the third target feature vector.

In step S4, the target spectrogram feature is converted into target audio.

Optionally, specific examples in the embodiment may refer to examples described in the above-described embodiments and optional implementations, which will not be repeated in the embodiment.

According to an embodiment of the present invention, the present invention further provides a non-transitory computer-readable storage medium storing at least one computer instruction. The non-transitory computer-readable storage medium is configured to store the at least one computer instruction, where the at least one computer instruction is configured to execute the steps of the above-described method embodiments at runtime.

Optionally, in the embodiment, the non-transitory computer-readable storage medium may be configured to store a computer program for executing the following steps.

In step S1, a first target feature vector is obtained from original audio, where the first target feature vector is used for representing a phoneme feature of the original audio.

In step S2, a second target feature vector and a third target feature vector are obtained from audio to be transferred, where the second target feature vector is used for representing a style prosody feature of the audio to be transferred, and the third target feature vector is used for representing a speaker feature of the audio to be transferred.

In step S3, a target spectrogram feature is obtained by performing spectrogram decoding on the first target feature vector, the second target feature vector and the third target feature vector.

In step S4, the target spectrogram feature is converted into target audio.

Optionally, in the embodiment, the non-transitory computer-readable storage medium may include, but is not limited to, an electronic, magnetic, optical, electromagnetic, infrared, or semiconductor system, apparatus, or device, or any suitable combination thereof. More specific examples of the readable storage medium may include an electrical connection based on at least one wire, a portable computer disk, a hard disk, RAM, ROM, an erasable programmable read-only memory (EPROM or a flash memory), an optical fiber, a portable compact disk read-only memory (CD-ROM), an optical storage device, a magnetic storage device, or any suitable combination thereof.

According to an embodiment of the present invention, the present invention further provides a computer program product. Program codes for implementing the method for processing audio of the present invention may be written in any combination of at least one programming language. The program codes may be provided for a general-purpose computer, a special-purpose computer, or a processor or controller of another programmable data processing apparatus, such that when the program codes are executed by the processor or controller, a function/operation specified in a flow chart and/or block diagram may be implemented. The program codes may be executed entirely or partially on a machine, and, as a stand-alone software package, executed partially on a machine and partially on a remote machine, or executed entirely on a remote machine or server.

In the above-described embodiments of the present invention, the descriptions of various embodiments are emphasized on their respective aspects, and for parts of a certain embodiment that are not described in detail, reference may be made to the associated descriptions of other embodiments.

In several embodiments provided in the present invention, it should be understood that the disclosed technologies may be implemented in other ways. The above-described apparatus embodiments are illustrative, for example, a division of the units may be a division of logical functions, and in practice there may be additional ways of division, for example, multiple units or assemblies may be combined or integrated into another system, or some features may be ignored or not executed. Further, the shown or discussed coupling or direct coupling or communication connection between each other may be an indirect coupling or communication connection by means of some interfaces, units or modules, and may be in an electrical or other form.

The units described as separated parts may be physically separated or not, and the parts displayed as units may be physical units or not, that is, they may be located in one place or distributed to multiple units. Some or all of the units may be selected according to actual needs to achieve the objective of the solution of the embodiment. In addition, each functional unit in each embodiment of the present invention may be integrated in one processing unit, or each unit may exist separately and physically, or at least two units may be integrated in one unit. The integrated units may be implemented in a hardware form and may also be implemented in a form of software functional unit.

If the integrated units are implemented in the form of the software functional units and sold or used as independent products, they may be stored in a computer-readable storage medium. Based on such understanding, the technical solution of the present invention may be embodied in the form of a software product in essence or a part contributing to the related art or all or some of the technical solution, and the computer software product is stored in a storage medium and includes several instructions for enabling a computer device (which may be a personal computer, a server, a network device, etc.) to execute all or some of the steps of the methods described in the various embodiments of the present invention. The above-described storage media include: a USB flash disk, ROM, RAM, a mobile hard disk, a magnetic disk, an optical disk and other media capable of storing program codes.

The above description are exemplary implementations of the present invention, and it should be noted that several improvements and modifications may also be made by those of ordinary skill in the art without departing from the present invention as defined by the appended claims.

**Claims**

1. A method for processing audio, comprising:

   obtaining a first target feature vector from original audio, wherein the first target feature vector is used for representing a phoneme feature of the original audio;
   obtaining a second target feature vector and a third target feature vector from audio to be transferred, wherein the second target feature vector is used for representing a style prosody feature of the audio to be transferred, and the third target feature vector is used for representing a speaker feature of the audio to be transferred;
   performing spectrogram decoding on the first target feature vector, the second target feature vector and the third target feature vector to obtain a target spectrogram feature; and
   converting the target spectrogram feature into target audio.

2. The method for processing audio as claimed in claim 1, wherein obtaining the first target feature vector from the original audio comprises:
   performing phoneme feature extraction on a first audio feature of the original audio by means of a phoneme feature extraction network model to obtain the first target feature vector.

3. The method for processing audio as claimed in claim 2, wherein performing the phoneme feature extraction on the first audio feature of the original audio by means of the phoneme feature extraction network model to obtain the first target feature vector comprises:
   executing, with the phoneme feature extraction network model, the following steps:

   performing convolution on the first audio feature to obtain the first intermediate feature vector;
   performing instance normalization on the first intermediate feature vector to obtain a second intermediate feature vector;
   performing vector quantization on the second intermediate feature vector to obtain a third intermediate feature vector; and
   performing contrastive predictive coding on the third intermediate feature vector to obtain the first target feature vector.

4. The method for processing audio as claimed in claim 3, further comprising:

   performing gradient stop on the first intermediate feature vector to obtain a first processing result;
   computing a first Euclidean distance between the first processing result and the third intermediate feature vector in a two-dimensional Euclidean space;
   performing gradient stop on the third intermediate feature vector to obtain a second processing result;
   computing a second Euclidean distance between the first intermediate feature vector and the second processing result in the two-dimensional Euclidean space;
   determining a first loss according to the first Euclidean distance and the second Euclidean distance; and
   updating network model parameters according to the first loss, wherein the network model parameters comprise model parameters of the phoneme feature extraction network model.

5. The method for processing audio as claimed in claim 3 or 4, further comprising:

obtaining a context vector on the basis of the third intermediate feature vector;
obtaining a predictive vector by using the context vector by means of at least one linear predictor;
within a value range determined on the basis of a target quantity, performing a first exponential operation on a third intermediate feature and the predictive vector to obtain a first operation result, and performing a second exponential operation on the third intermediate feature and the predictive vector to obtain a second operation result, wherein the target quantity is a quantity of the at least one linear predictor;
performing a logarithm operation on the first operation result and the second operation result to determine a second loss; and
updating the network model parameters according to the second loss, wherein the network model parameters comprise model parameters of the phoneme feature extraction network model.

6. The method for processing audio as claimed in any one of claims 3-5, further comprising:

performing speaker feature coding on the first intermediate feature vector and the third intermediate feature vector to obtain a first initial feature vector;
performing style prosody feature extraction on the first intermediate feature vector to obtain a second initial feature vector;
performing spectrogram decoding on the first initial feature vector, the second initial feature vector and the third intermediate feature vector by means of a spectrogram decoding network model to obtain a predictive spectrogram feature;
computing a third Euclidean distance between the predictive spectrogram feature and a real spectrogram feature in a one-dimensional Euclidean space, and computing a fourth Euclidean distance between the predictive spectrogram feature and the real spectrogram feature in the two-dimensional Euclidean space;
determining a third loss according to the third Euclidean distance and the fourth Euclidean distance; and
updating the network model parameters according to the third loss, wherein the network model parameters comprise model parameters of the phoneme feature extraction network model and/or model parameters of the spectrogram decoding network model.

7. The method for processing audio as claimed in claim 1, wherein obtaining the third target feature vector from the audio to be transferred comprises:

performing phoneme feature extraction on a second audio feature of the audio to be transferred to obtain a third initial feature vector and a fourth intermediate feature vector, wherein the third initial feature vector is used for representing a convolution result of the second audio feature, and the fourth intermediate feature vector is used for representing a vector quantization result of the second audio feature; and
performing speaker feature coding on the third initial feature vector and the fourth intermediate feature vector to obtain the third target feature vector.

8. The method for processing audio as claimed in claim 1, wherein performing the spectrogram decoding on the first target feature vector, the second target feature vector and the third target feature vector to obtain the target spectrogram feature comprises:

performing merging on the first target feature vector, the second target feature vector and the third target feature vector to obtain a merged vector; and
performing spectrogram decoding on the merged vector to obtain the target spectrogram feature.

9. A method for training a model, comprising:

obtaining a first data set, a second data set and a third data set, wherein the first data set comprises a plurality of phoneme feature vectors of original sample audio, the second data set comprises a plurality of style prosody feature vectors of sample audio to be transferred, and the third data set comprises a plurality of speaker feature vectors of the sample audio to be transferred;
obtaining a fourth data set according to the first data set, the second data set and the third data set, wherein the fourth data set comprises a merged vector obtained from a first phoneme feature vector, a second style prosody feature vector and a third speaker feature vector, the phoneme feature vectors comprise the first phoneme feature vector, the style prosody feature vectors comprise the second style prosody feature vector, and the speaker feature vectors comprise the third speaker feature vector; and

obtaining a target spectrogram decoding network model by training an initial spectrogram decoding network model on the basis of the fourth data set.

10. An apparatus for processing audio, comprising:

a first obtaining module, configured to obtain a first target feature vector from original audio, wherein the first target feature vector is used for representing a phoneme feature of the original audio;

a second obtaining module, configured to obtain a second target feature vector and a third target feature vector from audio to be transferred, wherein the second target feature vector is used for representing a style prosody feature of the audio to be transferred, and the third target feature vector is used for representing a speaker feature of the audio to be transferred;

a processing module, configured to perform spectrogram decoding on the first target feature vector, the second target feature vector and the third target feature vector to obtain a target spectrogram feature; and

a conversion module, configured to convert the target spectrogram feature into target audio.

11. The apparatus for processing audio as claimed in claim 10, wherein the first obtaining module is further configured to perform phoneme feature extraction on a first audio feature of the original audio by means of a phoneme feature extraction network model to obtain the first target feature vector;

or , wherein the second obtaining module is further configured to perform phoneme feature extraction on a second audio feature of the audio to be transferred to obtain a third initial feature vector and a fourth intermediate feature vector, wherein the third initial feature vector is used for representing a convolution result of the second audio feature, and the fourth intermediate feature vector is used for representing a vector quantization result of the second audio feature; and perform speaker feature coding on the third initial feature vector and the fourth intermediate feature vector to obtain the third target feature vector;

or, wherein the processing module is further configured to perform merging on the first target feature vector, the second target feature vector and the third target feature vector to obtain a merged vector; and perform spectrogram decoding on the merged vector to obtain the target spectrogram feature.

12. An apparatus for training a model, comprising:

a data set obtaining module, configured to obtain a first data set, a second data set and a third data set, wherein the first data set comprises a plurality of phoneme feature vectors of original sample audio, the second data set comprises a plurality of style prosody feature vectors of sample audio to be transferred, and the third data set comprises a plurality of speaker feature vectors of the sample audio to be transferred;

a data set processing module, configured to obtain a fourth data set according to the first data set, the second data set and the third data set, wherein the fourth data set comprises a merged vector obtained from a first phoneme feature vector, a second style prosody feature vector and a third speaker feature vector, the phoneme feature vectors comprise the first phoneme feature vector, the style prosody feature vectors comprise the second style prosody feature vector, and the speaker feature vectors comprise the third speaker feature vector; and

a training module, configured to obtain a target spectrogram decoding network model by training an initial spectrogram decoding network model on the basis of the fourth data set.

13. An electronic device, comprising: at least one processor; and

a memory communicatively connected with the at least one processor, wherein
the memory is configured to store at least one instruction executable by the at least one processor, and the at least one instruction is configured, when executed by the at least one processor, to enable the at least one processor to execute the method as claimed in any one of claims 1-9.

14. A non-transitory computer-readable storage medium storing at least one computer instruction, wherein the at least one computer instruction is configured, when executed by a computer, for enabling the computer to execute the method as claimed in any one of claims 1-9.

15. A computer program product, comprising a computer program, wherein when the computer program is executed by a processor, the method as claimed in any one of claims 1-9 is implemented.

**Patentansprüche**

1. Verfahren zur Verarbeitung von Audio, umfassend:

   Erhalten eines ersten Zielmerkmalsvektors aus dem Original-Audio, wobei der erste Zielmerkmalsvektor zum Darstellen eines Phonemmerkmals des Original-Audios verwendet wird;
   Erhalten eines zweiten Zielmerkmalsvektors und eines dritten Zielmerkmalsvektors aus zu übertragendem Audio, wobei der zweite Zielmerkmalsvektor zum Darstellen eines Stil-Prosodie-Merkmals des zu übertragenden Audios verwendet wird und der dritte Zielmerkmalsvektor zum Darstellen eines Sprechermerkmals des zu übertragenden Audios verwendet wird;
   Durchführen einer Spektrogrammdecodierung an dem ersten Zielmerkmalsvektor, dem zweiten Zielmerkmalsvektor und dem dritten Zielmerkmalsvektor, um ein Zielspektrogrammmerkmal zu erhalten; und
   Umwandeln des Zielspektrogrammmerkmals in Ziel-Audio.

2. Verfahren zur Verarbeitung von Audio nach Anspruch 1, wobei das Erhalten des ersten Zielmerkmalsvektors aus dem Original-Audio Folgendes umfasst:
   Durchführen einer Phonemmerkmalsextraktion an einem ersten Audiomerkmal des Original-Audios mittels eines Phonemmerkmalsextraktionsnetzwerkmodells, um den ersten Zielmerkmalsvektor zu erhalten.

3. Verfahren zur Verarbeitung von Audio nach Anspruch 2, wobei das Durchführen der Phonemmerkmalsextraktion an dem ersten Audiomerkmal des Original-Audios mittels des Phonemmerkmalsextraktionsnetzwerkmodells, um den ersten Zielmerkmalsvektor zu erhalten, Folgendes umfasst:
   Ausführen der folgenden Schritte mit dem Phonemmerkmalextraktionsnetzwerkmodell:

   Durchführen einer Faltung an dem ersten Audiomerkmal, um den ersten Zwischenmerkmalsvektor zu erhalten;
   Durchführen einer Instanznormalisierung an dem ersten Zwischenmerkmalsvektor, um einen zweiten Zwischenmerkmalsvektor zu erhalten;
   Durchführen einer Vektorquantisierung an dem zweiten Zwischenmerkmalsvektor, um einen dritten Zwischenmerkmalsvektor zu erhalten; und
   Durchführen einer kontrastiven prädiktiven Codierung an dem dritten Zwischenmerkmalsvektor, um den ersten Zielmerkmalsvektor zu erhalten.

4. Verfahren zur Verarbeitung von Audio nach Anspruch 3, ferner umfassend:

   Durchführen eines GradientStop an dem ersten Zwischenmerkmalsvektor, um ein erstes Verarbeitungsergebnis zu erhalten;
   Berechnen eines ersten euklidischen Abstands zwischen dem ersten Verarbeitungsergebnis und dem dritten Zwischenmerkmalsvektor in einem zweidimensionalen euklidischen Raum;
   Durchführen eines GradientStop an dem dritten Zwischenmerkmalsvektor, um ein zweites Verarbeitungsergebnis zu erhalten;
   Berechnen eines zweiten euklidischen Abstands zwischen dem ersten Zwischenmerkmalsvektor und dem zweiten Verarbeitungsergebnis in dem zweidimensionalen euklidischen Raum;
   Bestimmen eines ersten Verlustes entsprechend dem ersten euklidischen Abstand und dem zweiten euklidischen Abstand; und
   Aktualisieren der Netzwerkmodellparameter entsprechend dem ersten Verlust, wobei die Netzwerkmodellparameter Modellparameter des Phonemmerkmalsextraktionsnetzwerkmodells umfassen.

5. Verfahren zur Verarbeitung von Audio nach Anspruch 3 oder 4, ferner umfassend:

   Erhalten eines Kontextvektors auf Grundlage des dritten Zwischenmerkmalsvektors;
   Erhalten eines Prädiktionsvektors durch Verwenden des Kontextvektors mittels mindestens eines linearen Prädiktors;
   innerhalb eines Wertebereichs, der auf Grundlage einer Zielmenge bestimmt wird, Durchführen einer ersten Exponentialoperation an einem dritten Zwischenmerkmal und dem Prädiktionsvektor, um ein erstes Operationsergebnis zu erhalten, und Durchführen einer zweiten Exponentialoperation an dem dritten Zwischenmerkmal und dem Prädiktionsvektor, um ein zweites Operationsergebnis zu erhalten, wobei die Zielmenge eine Menge des mindestens einen linearen Prädiktors ist;

Durchführen einer Logarithmusoperation an dem ersten Operationsergebnis und dem zweiten Operationsergebnis, um einen zweiten Verlust zu bestimmen; und

Aktualisieren der Netzwerkmodellparameter entsprechend dem zweiten Verlust, wobei die Netzwerkmodellparameter Modellparameter des Phonemmerkmalsextraktionsnetzwerkmodells umfassen.

6. Verfahren zur Verarbeitung von Audio nach einem der Ansprüche 3-5, ferner umfassend:

Durchführen einer Sprechermerkmalscodierung an dem ersten Zwischenmerkmalsvektor und dem dritten Zwischenmerkmalsvektor, um einen ersten Anfangsmerkmalsvektor zu erhalten;

Durchführen einer Stil-Prosodie-Merkmalsextraktion an dem ersten Zwischenmerkmalsvektor, um einen zweiten Anfangsmerkmalsvektor zu erhalten;

Durchführen einer Spektrogrammdecodierung an dem ersten Anfangsmerkmalsvektor, dem zweiten Anfangsmerkmalsvektor und dem dritten Zwischenmerkmalsvektor mittels eines Spektrogrammdecodierungsnetzwerkmodells, um ein Prädiktionsspektrogrammmerkmal zu erhalten;

Berechnen eines dritten euklidischen Abstands zwischen dem Prädiktionsspektrogrammmerkmal und einem realen Spektrogrammmerkmal in einem eindimensionalen euklidischen Raum und Berechnen eines vierten euklidischen Abstands zwischen dem Prädiktionsspektrogrammmerkmal und dem realen Spektrogrammmerkmal in dem zweidimensionalen euklidischen Raum;

Bestimmen eines dritten Verlustes entsprechend dem dritten euklidischen Abstand und dem vierten euklidischen Abstand; und

Aktualisieren der Netzwerkmodellparameter entsprechend dem dritten Verlust, wobei die Netzwerkmodellparameter Modellparameter des Phonemmerkmalsextraktionsnetzwerkmodells und/oder Modellparameter des Spektrogrammdecodierungsnetzwerkmodells umfassen.

7. Verfahren zur Verarbeitung von Audio nach Anspruch 1, wobei das Erhalten des dritten Zielmerkmalsvektors aus dem zu übertragenden Audio Folgendes umfasst:

Durchführen einer Phonemmerkmalsextraktion an einem zweiten Audiomerkmal des zu übertragenden Audios, um einen dritten Anfangsmerkmalsvektor und einen vierten Zwischenmerkmalsvektor zu erhalten, wobei der dritte Anfangsmerkmalsvektor zum Darstellen eines Faltungsergebnisses des zweiten Audiomerkmals verwendet wird und der vierte Zwischenmerkmalsvektor zum Darstellen eines Vektorquantisierungsergebnisses des zweiten Audiomerkmals verwendet wird; und

Durchführen einer Sprechermerkmalscodierung an dem dritten Anfangsmerkmalsvektor und dem vierten Zwischenmerkmalsvektor, um den dritten Zielmerkmalsvektor zu erhalten.

8. Verfahren zur Verarbeitung von Audio nach Anspruch 1, wobei das Durchführen der Spektrogrammdecodierung an dem ersten Zielmerkmalsvektor, dem zweiten Zielmerkmalsvektor und dem dritten Zielmerkmalsvektor, um das Zielspektrogrammmerkmal zu erhalten, Folgendes umfasst:

Durchführen einer Zusammenführung an dem ersten Zielmerkmalsvektor, dem zweiten Zielmerkmalsvektor und dem dritten Zielmerkmalsvektor, um einen zusammengeführten Vektor zu erhalten; und

Durchführen einer Spektrogrammdecodierung an dem zusammengeführten Vektor, um das Zielspektrogrammmerkmal zu erhalten.

9. Verfahren zum Trainieren eines Modells, umfassend:

Erhalten eines ersten Datensatzes, eines zweiten Datensatzes und eines dritten Datensatzes, wobei der erste Datensatz eine Vielzahl von Phonemmerkmalsvektoren des Original-Beispielaudios umfasst, der zweite Datensatz eine Vielzahl von Stil-Prosodie-Merkmalsvektoren des zu übertragenden Beispielaudios umfasst und der dritte Datensatz eine Vielzahl von Sprechermerkmalsvektoren des zu übertragenden Beispielaudios umfasst;

Erhalten eines vierten Datensatzes entsprechend dem ersten Datensatz, dem zweiten Datensatz und dem dritten Datensatz, wobei der vierte Datensatz einen zusammengeführten Vektor umfasst, der aus einem ersten Phonemmerkmalsvektor, einem zweiten Stil-Prosodie-Merkmalsvektor und einem dritten Sprechermerkmalsvektor erhalten wurde, wobei die Phonemmerkmalsvektoren den ersten Phonemmerkmalsvektor umfassen, die Stil-Prosodie-Merkmalsvektoren den zweiten Stil-Prosodie-Merkmalsvektor umfassen und die Sprechermerkmalsvektoren den dritten Sprechermerkmalsvektor umfassen; und
Erhalten eines Zielspektrogrammdecodierungsnetzwerkmodells durch Trainieren eines Anfangsspektrogrammdecodierungsnetzwerkmodells auf Grundlage des vierten Datensatzes.

10. Einrichtung zur Verarbeitung von Audio, umfassend:

ein erstes Modul zum Erhalten, das dazu konfiguriert ist, einen ersten Zielmerkmalsvektor aus dem Original-Audio zu erhalten, wobei der erste Zielmerkmalsvektor zum Darstellen eines Phonemmerkmals des Original-Audios verwendet wird;
ein zweites Modul zum Erhalten, das dazu konfiguriert ist, einen zweiten Zielmerkmalsvektor und einen dritten Zielmerkmalsvektor aus zu übertragendem Audio zu erhalten, wobei der zweite Zielmerkmalsvektor zum Darstellen eines Stil-Prosodie-Merkmals des zu übertragenden Audios verwendet wird und der dritte Zielmerkmalsvektor zum Darstellen eines Sprechermerkmals des zu übertragenden Audios verwendet wird;
ein Verarbeitungsmodul, das dazu konfiguriert ist, eine Spektrogrammdecodierung an dem ersten Zielmerkmalsvektor, dem zweiten Zielmerkmalsvektor und dem dritten Zielmerkmalsvektor durchzuführen, um ein Zielspektrogrammmerkmal zu erhalten; und
ein Umwandlungsmodul, das dazu konfiguriert ist, das Zielspektrogrammmerkmal in Ziel-Audio umzuwandeln.

11. Einrichtung zur Verarbeitung von Audio nach Anspruch 10, wobei das erste Modul zum Erhalten ferner dazu konfiguriert ist, eine Phonemmerkmalsextraktion an einem ersten Audiomerkmal des Original-Audios mittels eines Phonemmerkmalsextraktionsnetzwerkmodells durchzuführen, um den ersten Zielmerkmalsvektor zu erhalten;

oder wobei das zweite Modul zum Erhalten ferner dazu konfiguriert ist, eine Phonemmerkmalsextraktion an einem zweiten Audiomerkmal des zu übertragenden Audios durchzuführen, um einen dritten Anfangsmerkmalsvektor und einen vierten Zwischenmerkmalsvektor zu erhalten, wobei der dritte Anfangsmerkmalsvektor zum Darstellen eines Faltungsergebnisses des zweiten Audiomerkmals verwendet wird und der vierte Zwischenmerkmalsvektor zum Darstellen eines Vektorquantisierungsergebnisses des zweiten Audiomerkmals verwendet wird; und eine Sprechermerkmalscodierung an dem dritten Anfangsmerkmalsvektor und dem vierten Zwischenmerkmalsvektor durchzuführen, um den dritten Zielmerkmalsvektor zu erhalten;
oder wobei das Verarbeitungsmodul ferner dazu konfiguriert ist, eine Zusammenführung an dem ersten Zielmerkmalsvektor, dem zweiten Zielmerkmalsvektor und dem dritten Zielmerkmalsvektor durchzuführen, um einen zusammengeführten Vektor zu erhalten; und eine Spektrogrammdecodierung an dem zusammengeführten Vektor durchzuführen, um das Zielspektrogrammmerkmal zu erhalten.

12. Einrichtung zum Trainieren eines Modells, umfassend:

ein Modul zum Erhalten von Datensätzen, das dazu konfiguriert ist, einen ersten Datensatz, einen zweiten Datensatz und einen dritten Datensatz zu erhalten, wobei der erste Datensatz eine Vielzahl von Phonemmerkmalsvektoren des Original-Beispielaudios umfasst, der zweite Datensatz eine Vielzahl von Stil-Prosodie-Merkmalsvektoren des zu übertragenden Beispielaudios umfasst und der dritte Datensatz eine Vielzahl von Sprechermerkmalsvektoren des zu übertragenden Beispielaudios umfasst;
ein Datensatzverarbeitungsmodul, das dazu konfiguriert ist, einen vierten Datensatz entsprechend dem ersten Datensatz, dem zweiten Datensatz und dem dritten Datensatz zu erhalten, wobei der vierte Datensatz einen zusammengeführten Vektor umfasst, der aus einem ersten Phonemmerkmalsvektor, einem zweiten Stil-Prosodie-Merkmalsvektor und einem dritten Sprechermerkmalsvektor erhalten wurde, wobei die Phonemmerkmalsvektoren den ersten Phonemmerkmalsvektor umfassen, die Stil-Prosodie-Merkmalsvektoren den zweiten Stil-Prosodie-Merkmalsvektor umfassen und die Sprechermerkmalsvektoren den dritten Sprechermerkmalsvektor umfassen; und
ein Trainingsmodul, das dazu konfiguriert ist, durch Trainieren eines Anfangsspektrogrammdecodierungsnetzwerkmodells auf Grundlage des vierten Datensatzes ein Zielspektrogrammdecodierungsnetzwerkmodell zu erhalten.

13. Elektronische Vorrichtung, umfassend:

mindestens einen Prozessor; und
einen Speicher, der kommunikativ mit dem mindestens einen Prozessor verbunden ist, wobei
der Speicher dazu konfiguriert ist, mindestens eine Anweisung zu speichern, die durch den mindestens einen Prozessor ausführbar ist, und die mindestens eine Anweisung dazu konfiguriert ist, bei Ausführung durch den mindestens einen Prozessor es dem mindestens einen Prozessor zu ermöglichen, das Verfahren nach einem der Ansprüche 1-9 auszuführen.

14. Nicht flüchtiges, computerlesbares Speichermedium, das mindestens eine Computeranweisung speichert, wobei die mindestens eine Computeranweisung dazu konfiguriert ist, bei Ausführung durch einen Computer es dem Computer zu ermöglichen, das Verfahren nach einem der Ansprüche 1-9 auszuführen.

15. Computerprogrammprodukt, umfassend ein Computerprogramm, wobei bei Ausführung des Computerprogramms durch einen Prozessor das Verfahren nach einem der Ansprüche 1-9 ausgeführt wird.

**Revendications**

1. Procédé permettant le traitement audio, comprenant :

   l'obtention d'un premier vecteur de caractéristiques cible à partir de l'audio d'origine, ledit premier vecteur de caractéristiques cible étant utilisé pour représenter une caractéristique de phonème de l'audio d'origine ;
   l'obtention d'un deuxième vecteur de caractéristiques cible et d'un troisième vecteur de caractéristiques cible à partir de l'audio à transférer, ledit deuxième vecteur de caractéristiques cible étant utilisé pour représenter une caractéristique de prosodie de style de l'audio à transférer, et ledit troisième vecteur de caractéristiques cible étant utilisé pour représenter une caractéristique de locuteur de l'audio à transférer ;
   la réalisation d'un décodage de spectrogramme sur le premier vecteur de caractéristiques cible, le deuxième vecteur de caractéristiques cible et le troisième vecteur de caractéristiques cible pour obtenir une caractéristique de spectrogramme cible ; et
   la conversion de la caractéristique de spectrogramme cible en audio cible.

2. Procédé permettant le traitement audio selon la revendication 1, ladite obtention du premier vecteur de caractéristiques cible à partir de l'audio d'origine comprenant :
   la réalisation d'une extraction de caractéristiques de phonème sur une première caractéristique audio de l'audio d'origine au moyen d'un modèle de réseau d'extraction de caractéristiques de phonème pour obtenir le premier vecteur de caractéristiques cible.

3. Procédé permettant le traitement audio selon la revendication 2, ladite réalisation de l'extraction de caractéristiques de phonème sur la première caractéristique audio de l'audio d'origine au moyen du modèle de réseau d'extraction de caractéristiques de phonème pour obtenir le premier vecteur de caractéristiques cible comprenant :
   l'exécution, avec le modèle de réseau d'extraction de caractéristiques de phonème, les étapes suivantes :

   la réalisation d'une convolution sur la première caractéristique audio pour obtenir le premier vecteur de caractéristiques intermédiaire ;
   la réalisation d'une normalisation d'instance sur le premier vecteur de caractéristiques intermédiaire pour obtenir un deuxième vecteur de caractéristiques intermédiaire ;
   la réalisation d'une quantification vectorielle sur le deuxième vecteur de caractéristiques intermédiaire pour obtenir un troisième vecteur de caractéristiques intermédiaire ; et
   la réalisation d'un codage prédictif contrastif sur le troisième vecteur de caractéristiques intermédiaire pour obtenir le premier vecteur de caractéristiques cible.

4. Procédé permettant le traitement audio selon la revendication 3, comprenant en outre :

   la réalisation d'un arrêt de gradient sur le premier vecteur de caractéristiques intermédiaire pour obtenir un premier résultat de traitement ;
   le calcul d'une première distance euclidienne entre le premier résultat de traitement et le troisième vecteur de caractéristiques intermédiaire dans un espace euclidien bidimensionnel ;
   la réalisation d'un arrêt de gradient sur le troisième vecteur de caractéristiques intermédiaire pour obtenir un second résultat de traitement ;
   le calcul d'une deuxième distance euclidienne entre le premier vecteur de caractéristiques intermédiaire et le second résultat de traitement dans l'espace euclidien bidimensionnel ;
   la détermination d'une première perte en fonction de la première distance euclidienne et de la deuxième distance euclidienne ; et

la mise à jour de paramètres de modèle de réseau en fonction de la première perte, lesdits paramètres de modèle de réseau comprenant des paramètres de modèle du modèle de réseau d'extraction de caractéristiques de phonème.

5. Procédé permettant le traitement audio selon la revendication 3 ou 4, comprenant en outre :

l'obtention d'un vecteur de contexte sur la base du troisième vecteur de caractéristiques intermédiaire ;
l'obtention d'un vecteur prédictif à l'aide du vecteur de contexte au moyen d'au moins un prédicteur linéaire ;
dans une plage de valeurs déterminée sur la base d'une quantité cible, la réalisation d'une première opération exponentielle sur une troisième caractéristique intermédiaire et le vecteur prédictif pour obtenir un premier résultat d'opération, et la réalisation d'une seconde opération exponentielle sur la troisième caractéristique intermédiaire et le vecteur prédictif pour obtenir un second résultat d'opération, ladite quantité cible étant une quantité dudit au moins un prédicteur linéaire ;
la réalisation d'une opération logarithmique sur le résultat de la première opération et sur le résultat de la seconde opération pour déterminer une deuxième perte ; et
la mise à jour de paramètres de modèle de réseau en fonction de la deuxième perte, lesdits paramètres de modèle de réseau comprenant des paramètres de modèle du modèle de réseau d'extraction de caractéristiques de phonème.

6. Procédé permettant le traitement audio selon l'une quelconque des revendications 3 à 5, comprenant en outre :

la réalisation d'un codage de caractéristiques de locuteur sur le premier vecteur de caractéristiques intermédiaire et le troisième vecteur de caractéristiques intermédiaire pour obtenir un premier vecteur de caractéristiques initial ;
la réalisation d'une extraction de caractéristiques de prosodie de style sur le premier vecteur de caractéristiques intermédiaire pour obtenir un deuxième vecteur de caractéristiques initial ;
la réalisation d'un décodage de spectrogramme sur le premier vecteur de caractéristiques initial, le deuxième vecteur de caractéristiques initial et le troisième vecteur de caractéristiques intermédiaire au moyen d'un modèle de réseau de décodage de spectrogramme pour obtenir une caractéristique de spectrogramme prédictive ;
le calcul d'une troisième distance euclidienne entre la caractéristique de spectrogramme prédictive et une caractéristique de spectrogramme réelle dans un espace euclidien unidimensionnel, et le calcul d'une quatrième distance euclidienne entre la caractéristique de spectrogramme prédictive et la caractéristique de spectrogramme réelle dans l'espace euclidien bidimensionnel ;
la détermination d'une troisième perte en fonction de la troisième distance euclidienne et de la quatrième distance euclidienne ; et
la mise à jour des paramètres de modèle de réseau en fonction de la troisième perte, lesdits paramètres de modèle de réseau comprenant des paramètres de modèle du modèle de réseau d'extraction de caractéristiques de phonème et/ou des paramètres de modèle du modèle de réseau de décodage de spectrogramme.

7. Procédé permettant le traitement audio selon la revendication 1, ladite obtention du troisième vecteur de caractéristiques cible à partir de l'audio à transférer comprenant :

la réalisation d'une extraction de caractéristiques de phonème sur une seconde caractéristique audio de l'audio à transférer pour obtenir un troisième vecteur de caractéristiques initial et un quatrième vecteur de caractéristiques intermédiaires, ledit troisième vecteur de caractéristiques initial étant utilisé pour représenter un résultat de convolution de la seconde caractéristique audio, et ledit quatrième vecteur de caractéristiques intermédiaire étant utilisé pour représenter un résultat de quantification vectorielle de la seconde caractéristique audio ; et
la réalisation d'un codage de caractéristiques de locuteur sur le troisième vecteur de caractéristiques initial et le quatrième vecteur de caractéristiques intermédiaire pour obtenir le troisième vecteur de caractéristiques cible.

8. Procédé permettant le traitement audio selon la revendication 1, ladite réalisation du décodage du spectrogramme sur le premier vecteur de caractéristiques cible, le deuxième vecteur de caractéristiques cible et le troisième vecteur de caractéristiques cible pour obtenir la caractéristique de spectrogramme cible comprenant :

la réalisation d'une fusion sur le premier vecteur de caractéristiques cible, le deuxième vecteur de caractéristiques cible et le troisième vecteur de caractéristiques cible pour obtenir un vecteur fusionné ; et
la réalisation d'un décodage de spectrogramme sur le vecteur fusionné pour obtenir la caractéristique de spectrogramme cible.

**9.** Procédé permettant la formation d'un modèle, comprenant :

l'obtention d'un premier ensemble de données, d'un deuxième ensemble de données et d'un troisième ensemble de données, ledit premier ensemble de données comprenant une pluralité de vecteurs de caractéristiques de phonème d'un échantillon audio d'origine, ledit deuxième ensemble de données comprenant une pluralité de vecteurs de caractéristiques de prosodie de style d'échantillon audio à transférer, et ledit troisième ensemble de données comprenant une pluralité de vecteurs de caractéristiques de locuteur de l'échantillon audio à transférer ;

l'obtention d'un quatrième ensemble de données selon le premier ensemble de données, le deuxième ensemble de données et le troisième ensemble de données, ledit quatrième ensemble de données comprenant un vecteur fusionné obtenu à partir d'un premier vecteur de caractéristiques de phonème, d'un deuxième vecteur de caractéristiques de prosodie de style et d'un troisième vecteur de caractéristiques de locuteur, lesdits vecteurs de caractéristiques de phonème comprenant le premier vecteur de caractéristiques de phonème, lesdits vecteurs de caractéristiques de prosodie de style comprenant le deuxième vecteur de caractéristiques de prosodie de style, et lesdits vecteurs de caractéristiques de locuteur comprenant le troisième vecteur de caractéristiques de locuteur ; et

l'obtention d'un modèle de réseau de décodage de spectrogramme cible par entraînement d'un modèle de réseau de décodage de spectrogramme initial sur la base du quatrième ensemble de données.

**10.** Appareil permettant le traitement audio, comprenant :

un premier module d'obtention, configuré pour obtenir un premier vecteur de caractéristiques cible à partir de l'audio d'origine, ledit premier vecteur de caractéristiques cible étant utilisé pour représenter une caractéristique de phonème de l'audio d'origine ;

un second module d'obtention, configuré pour obtenir un deuxième vecteur de caractéristiques cible et un troisième vecteur de caractéristiques cible à partir de l'audio à transférer, ladite deuxième vecteur de caractéristiques cibles étant utilisé pour représenter une caractéristique de prosodie de style de l'audio à transférer, et ledit troisième vecteur de caractéristiques cible étant utilisé pour représenter une caractéristique de locuteur de l'audio à transférer ;

un module de traitement, configuré pour réaliser un décodage de spectrogramme sur le premier vecteur de caractéristiques cible, le deuxième vecteur de caractéristiques cible et le troisième vecteur de caractéristiques cible pour obtenir une caractéristique de spectrogramme cible ; et

un module de conversion, configuré pour convertir la caractéristique de spectrogramme cible en audio cible.

**11.** Appareil permettant le traitement audio selon la revendication 10, ledit premier module d'obtention étant en outre configuré pour réaliser une extraction de caractéristiques de phonème sur une première caractéristique audio de l'audio d'origine au moyen d'un modèle de réseau d'extraction de caractéristiques de phonème pour obtenir le premier vecteur de caractéristiques cible ;

ou, ledit second module d'obtention étant en outre configuré pour réaliser une extraction de caractéristiques de phonème sur une seconde caractéristique audio de l'audio à transférer pour obtenir un troisième vecteur de caractéristiques initial et un quatrième vecteur de caractéristiques intermédiaire, ledit troisième vecteur de caractéristiques initial étant utilisé pour représenter un résultat de convolution de la seconde caractéristique audio, et ledit quatrième vecteur de caractéristiques intermédiaire étant utilisé pour représenter un résultat de quantification vectorielle de la seconde caractéristique audio ; et réaliser un codage de caractéristiques de locuteur sur le troisième vecteur de caractéristiques initial et le quatrième vecteur de caractéristiques intermédiaire pour obtenir le troisième vecteur de caractéristiques cible ;

ou, dans lequel le module de traitement est en outre configuré pour réaliser une fusion sur le premier vecteur de caractéristiques cible, le deuxième vecteur de caractéristiques cible et le troisième vecteur de caractéristiques cible pour obtenir un vecteur fusionné ; et réaliser un décodage de spectrogramme sur le vecteur fusionné pour obtenir la caractéristique de spectrogramme cible.

**12.** Appareil permettant la formation d'un modèle, comprenant :

un module d'obtention d'ensembles de données, configuré pour obtenir un premier ensemble de données, un deuxième ensemble de données et un troisième ensemble de données, ledit premier ensemble de données comprenant une pluralité de vecteurs de caractéristiques de phonème de l'échantillon audio d'origine, ledit deuxième ensemble de données comprenant une pluralité de vecteurs de caractéristiques de prosodie de style de l'échantillon audio à transférer, et ledit troisième ensemble de données comprenant une pluralité de vecteurs de caractéristiques de locuteur de l'échantillon audio à transférer ;

un module de traitement d'ensemble de données, configuré pour obtenir un quatrième ensemble de données selon le premier ensemble de données, le deuxième ensemble de données et le troisième ensemble de données, ledit quatrième ensemble de données comprenant un vecteur fusionné obtenu à partir d'un premier vecteur de caractéristiques de phonème, d'un deuxième vecteur de caractéristiques de prosodie de style et d'un troisième vecteur de caractéristiques de locuteur, lesdits vecteurs de caractéristiques de phonème comprenant le premier vecteur de caractéristiques de phonème, lesdits vecteurs de caractéristiques de prosodie de style comprenant le deuxième vecteur de caractéristiques de prosodie de style, et lesdits vecteurs de caractéristiques de locuteur comprenant le troisième vecteur de caractéristiques de locuteur ; et

un module de formation, configuré pour obtenir un modèle de réseau de décodage de spectrogramme cible en entraînant un modèle de réseau de décodage de spectrogramme initial sur la base du quatrième ensemble de données.

13. Dispositif électronique, comprenant :

au moins processeur ; et
une mémoire connectée de manière communicative audit au moins un processeur,
ladite mémoire étant configurée pour stocker au moins une instruction exécutable par ledit au moins un processeur, et ladite au moins une instruction étant configurée, lorsqu'elle est exécutée par ledit au moins un processeur, pour permettre audit au moins un processeur d'exécuter le procédé selon l'une quelconque des revendications 1 à 9.

14. Support de stockage non transitoire lisible par ordinateur stockant au moins une instruction informatique, ladite au moins une instruction informatique étant configurée, lorsqu'elle est exécutée par un ordinateur, pour permettre à l'ordinateur d'exécuter le procédé selon l'une quelconque des revendications 1 à 9.

15. Produit de programme informatique, comprenant un programme informatique, lorsque le programme informatique est exécuté par un processeur, le procédé selon l'une quelconque des revendications 1 à 9 étant mis en oeuvre.

**Fig. 1**

**Fig. 2**

A first target feature vector is obtained from original audio, where the first target feature vector is used for representing a phoneme feature of the original audio ⌐S31

A second target feature vector and a third target feature vector are obtained from audio to be transferred, where the second target feature vector is used for representing a style prosody feature of the audio to be transferred, and the third target feature vector is used for representing a speaker feature of the audio to be transferred ⌐S32

A target spectrogram feature is obtained by performing spectrogram decoding on the first target feature vector, the second target feature vector and the third target feature vector ⌐S33

The target spectrogram feature is converted into target audio ⌐S34

Fig. 3

**Fig. 4**

Fig. 5

A first data set, a second data set and a third data set are obtained, where the first data set includes multiple phoneme feature vectors of original sample audio, the second data set includes multiple style prosody feature vectors of sample audio to be transferred, and the third data set includes multiple speaker feature vectors of the sample audio to be transferred

S601

A fourth data set is obtained according to the first data set, the second data set and the third data set, where the fourth data set includes a merged vector obtained from a first phoneme feature vector, a second style prosody feature vector and a third speaker feature vector, the phoneme feature vectors include the first phoneme feature vector, the style prosody feature vectors include the second style prosody feature vector, and the speaker feature vectors include the third speaker feature vector

S602

A target spectrogram decoding network model is obtained by training an initial spectrogram decoding network model on the basis of the fourth data set

S603

**Fig. 6**

Apparatus for processing audio 700

First obtaining module 701

Second obtaining module 702

Processing module 703

Conversion module 704

**Fig. 7**

Apparatus for training a model 800

Data set obtaining module 801

Data set processing module 802

Training module 803

**Fig. 8**

**REFERENCES CITED IN THE DESCRIPTION**

**Non-patent literature cited in the description**

- Transferring Source Style in Non-Parallel Voice Conversion. **SONGXIANG, LIU et al.** ARXIV.ORG. OLIN LIBRARY CORNELL UNIVERSITY, 19 May 2020